(19) **Europäisches Patentamt / European Patent Office / Office européen des brevets**

(11) **EP 4 047 626 A1**

(12) **EUROPEAN PATENT APPLICATION**

(43) Date of publication:
**24.08.2022 Bulletin 2022/34**

(21) Application number: **21158434.7**

(22) Date of filing: **22.02.2021**

(51) International Patent Classification (IPC):
**H01G 11/26** (2013.01)　　　**H01G 11/36** (2013.01)
**H01G 11/86** (2013.01)

(52) Cooperative Patent Classification (CPC):
**H01G 11/36; H01G 11/26; H01G 11/86**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Meilleur Temps**
**2000 Neuchâtel (CH)**

(72) Inventor: **SEMON, Guy**
**2000 NEUCHATEL (CH)**

(74) Representative: **IP Trust**
**2, rue de Clichy**
**75009 Paris (FR)**

(54) **SUPERIMPOSED MULTILAYER NANOSTRUCTURE FOR A SUPERCAPACITOR ELECTRODE**

(57) The invention concerns a method for fabricating an electrode comprising the following steps:
- Generating a three-dimensional (3D) nanostructure,
- Depositing superimposed multilayers of structural material and sacrificial material that is different from the structural material, on the internal surfaces of the 3D nanostructure,
- Removing the sacrificial material to form pores between the layers of structural material.

The invention also concerns an electrode for a supercapacitor comprising a three-dimensional (3D) nanostructure, the internal surfaces of which are coated/deposited by superimposed multilayers of at least one structural material with pores confined between layers.

And the invention concerns a supercapacitor with at least one electrode as previously mentioned, wherein an electrolyte is filled inside the pores between the structural layers.

EP 4 047 626 A1

**Description**

Technical field

The present invention relates to nanostructures, and more particularly, to nanostructures with superimposed multilayer coatings for interior and exterior surfaces.

Background

The nanostructures, e.g. vertically aligned carbon nanotubes (VACNT) have large surface areas, which has a large potential in different applications. However, there are several practical problems in using the VACNT produced by the technology known today.

Firstly, VACNTs without any additional treatment have much less surface area than activated carbon for the usage in modern supercapacitors. Secondly, the stability of the VACNTs is not good, because a large part of internal volume is hollow.

Advantages of the invention

The present disclosure has been developed in response to the present state of the art, and in particular, in response to the problems and needs in the art that have not yet been fully solved by electrodes currently available. Compared to the state of the art, the present invention has the following advantage: larger surface area per volume, higher stability in the structure, large thickness (>1mm)electrodes, decreased transport lengths enabled by the interdigitated electrodes structure, precise control of pores sizes.

Brief summary of the invention

The present invention concerns a method for fabricating an electrode comprising the following steps:

- Generating a three-dimensional (3D) nanostructure,
- Depositing superimposed multilayers of structural material and sacrificial material that is different from the structural material, on the internal surfaces of the 3D nanostructure,
- Removing the sacrificial material to form pores between the layers of structural material.

The invention concerns a plurality of variations of the methods, which include the following steps either alone or in combination.

- the 3D nanostructure is made from a matrix of nanotubes or nanorods realized in the material among carbon, boron nitride, silicon.
- the porosity of the 3D nanostructure is controlled by varying the diameter of the nanotubes/nanorodes, the pitch between the nanotubes/nanorodes, the thickness of the superimposed multilayers.
- the 3D nanostructure is made from a vertically aligned carbon nanotubes arrays (VANTAs).
- the superimposed multilayers are deposited by atomic layer deposition (ALD), chemical vapor deposition (CVD), molecular layer deposition (MLD).
- the structural material is chosen from Carbon, tungsten, titanium, copper, the sacrificial material is chosen from Silicon oxide, iron oxide, silicon, carbon.
- the sacrificial material is at least partially removed by plasma etching.
- the three-dimensional (3D) nanostructure is removed.
- a mechanical connection is added between the layers of structural material to avoid displacement of the layers.
- the mechanical connection is generated by adding a bottom base from one side of the 3D nanostructure to lock the structural layers.
- the mechanical connection is generated by annealing a low melting point material between the structural layers.

The present invention concerns an electrode for a supercapacitor comprising a three-dimensional (3D) nanostructure, the internal surfaces of which are coated/deposited by superimposed multilayers of at least one structural material with pores confined between layers.

The invention concerns a plurality of variations of the electrode, which include the following modes of realization either alone or in combination.

- a mechanical connection is placed between the structural layers to link and to fix the structural layers.
- the mechanical connection is a bottom base in connection with all the multilayer of structural material at one side of the 3D nanostructure.
- the mechanical connection is in the form of many nanoparticle spacers between the multilayer of structural material.

The present invention concerns a supercapacitor with at least one electrode from any one of the precedent claim, wherein an electrolyte is filled inside the pores between the structural layers. In the supercapacitor, the electrolyte is chosen among aqueous electrolyte, ionic liquid, organic electrolyte, solid or pseudo-solid electrolyte.

Brief description of the drawings

FIG.1 illustrates a deposition process of a nanostructure (VACNT) in a cross-sectional view.
Figures 2a and 2b show cross-sectional views of a nanostructure with two layers of superimposed coatings.
Figure 3 shows the estimation of surface area per volume as a function of the layer numbers with various thickness of the structural layer.
Figures 4 and 5 show the processes to create mechanical connections between the structural layers.
Figure 6 shows the estimation of surface area per volume as a function of the layer numbers with various thickness of the sacrificial layer.
The figure 7 shows a supercapacitor made with interdigitated electrodes in superimposed multiplayer nanostructure.

General concept of the invention

In the prior art, it is known how to fabricate a forest of vertically aligned carbon nanotubes (VACNT). In the present invention, this VACNT is used as a starting point to provide a scaffold to generate a porous nanostructure with super high surface area per volume ratio. However, the present invention is not limited to the example of VACNT, other kinds of nanostructures, e.g. graphene foams, silicon nanowires, or nanorods etc. can also be used as the starting point to generate the porous nanostructure.

The VACNT forest is coated with multiple layers of two different materials. One material is the structural material that remains after the reactions as the main component of the nanostructure. The other material is a sacrificial material that is removed during the reactions. The structural material and the sacrificial material are alternatively deposited on the surfaces of the VACNT scaffold to form laminated coating layers. When the sacrificial material is removed, a nanostructure with superimposed multiple layers of the structural material coatings remains. The VACNT scaffold can be kept within the nanostructure, or can be removed depending on the application. The nanostructure made in such a method has a porous structure with much higher surface area per volume and total surface area than the ones of VACNT without treatment.

Example of fabrication

There are multiple material and deposition systems that could work to make these superimposed multi-layers nanostructures. One example is given hereafter for illustrative but not limitative purpose.

Deposition

Tungsten is used as the structural material, while carbon or an organic carbon-based material is used as the sacrificial material. The tungsten could be deposited by atomic layer deposition (ALD) and the carbon/organic could be deposited by ALD, chemical vapor deposition (CVD), or molecular layer deposition (MLD). Alternative layers of tungsten and carbon/organic are coated onto a VACNT forest.

Exposition

The deposition enables each carbon nanotube inside VACNT gets fully coated. The coating conforms to the shape of individual carbon nanotubes. Using the chemical vapor deposition, both interior and exterior surfaces of the VACNT are conformally coated because of the porous structure of VACNT. Due to the conformal nature of the coating, only the last applied layer is exposed to exterior. All the previously deposited layers are covered by the last applied layer. In order to expose all the deposited layers, the nanostructure is etched by an $O_2 + SF_6$ plasma. The plasma etch exposes the layers on the top and external sides of the nanostructure, but does not change the characteristics of the internal sides of the nanostructure because the plasma does not penetrate far inside the nanostructure.

Removing

Now that the multiple layers and the VACNT scaffold are exposed. The carbon layer is removed by exposing the electrode to hydrogen gas with a high water vapor content at 700-800 °C. The water vapor etches away the carbon and the hydrogen prevents the tungsten from oxidizing. The water vapor removes not only the sacrificial layers but also the VACNTs, which further increases the surface area per volume of the nanostructure. The remaining nanostructure has two complex surfaces for each tungsten layer.

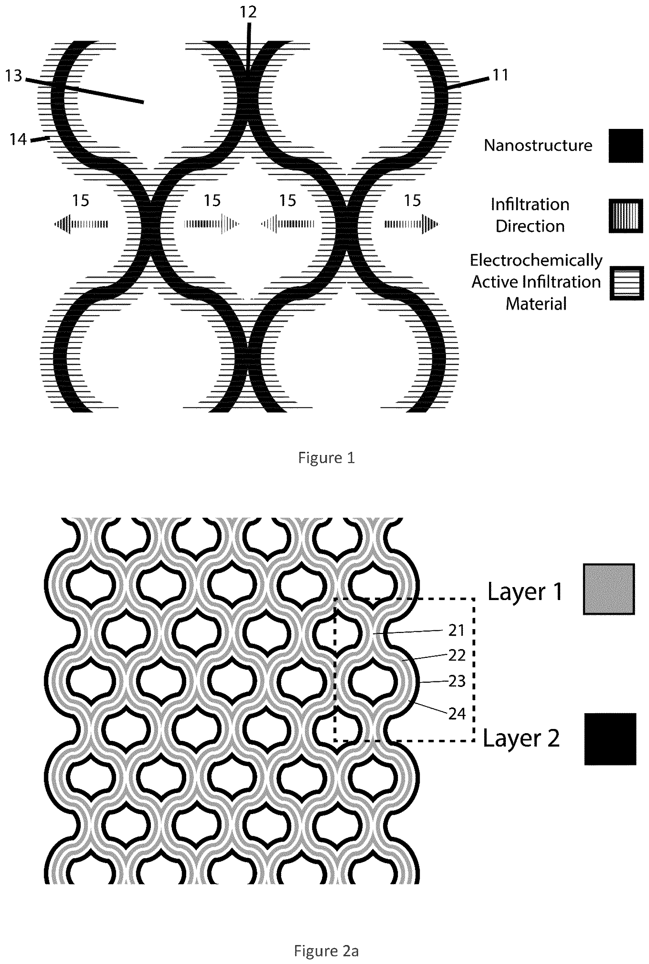

The figure 1 illustrates a deposition process of a nanostructure (VACNT) in a cross-sectional view. The wavy shape columns 11 representing the nanotubes 11, each of which continues in both upper and lower directions and repeats the pattern until reaches a height between about 1 to 10,000 micrometers. The distance between the nanotubes is called pitch, which is determined by the patterning of catalyst. The adjacent nanotubes touch each other at the crossing point 12. The nanotubes form a scaffold with empty spaces 13, which represents about 95% of the total volume of the nanostructure. A coating 14 is deposited on the surface of the nanotubes 11. The arrows 15 indicate the deposition direction. As the deposition process continues, the thickness of the coating layer 14 increases. Different materials can be deposited alternatively to form superimposed multilayer coatings. As the thickness of coatings increases, the empty space 13 decreases. The deposited material locks/freezes the nanotubes to increase the stability of this nanostructure.

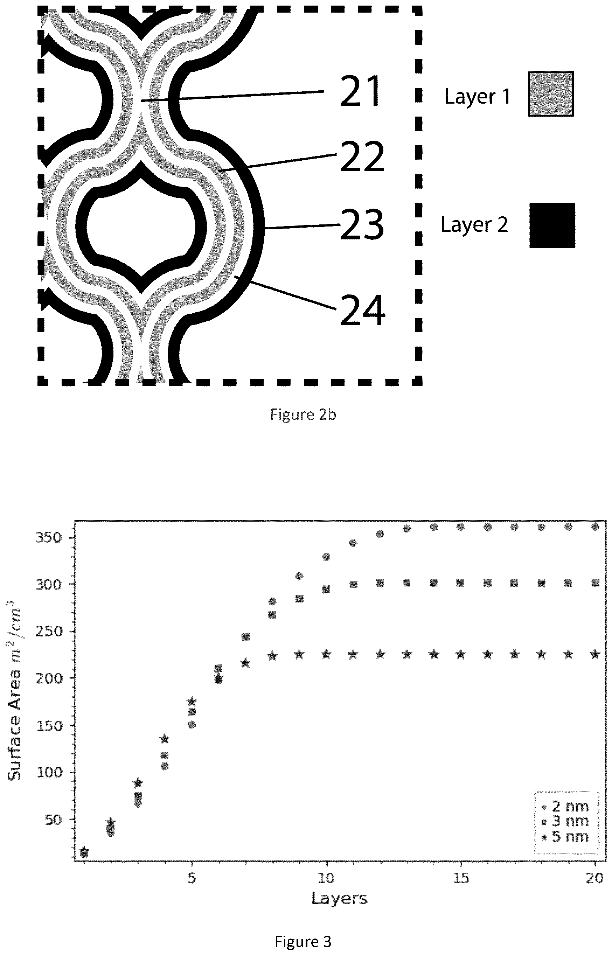

Figures 2a and 2b show cross-sectional views of a nanostructure with two layers of superimposed coatings. Inside layer 1 of the coating (22), there are pores (21) left behind after the VACNTs being removed. In between layer 1 (22) and layer 2 (23), there are pores (24) left behind after the sacrificial carbon layer being removed. Both layer 1 (22) and layer 2 (23) have interior and exterior surfaces that contribute to the total surface area. The top and external sides of the nanostructure are etched to expose surfaces of the inner layers 1 and 2. Electrolyte can be injected into the pores (21 and 24) to have direct contact with the surfaces of the layers (22 and 23). Thus, the ions can penetrate everywhere at the interior of the nanostructure.

It is also possible to add more than two layers of superimposed structural material coating and sacrificial material coating.

There are several alternative fabrication methods. For example, it is possible to use tungsten as a structural material applied by an atomic layer deposition (ALD), and to use $SiO_2$ or another oxide as a sacrificial material applied also by ALD technic. The layers of sacrificial material can be etched by HF vapor and a $SF_6$ plasma. Another example is to use carbon as a structural material and to use $SiO_2$ as a sacrificial material, which can be etched by HF vapor.

This method allows to increase dramatically the surface area per volume of the nanostructure. Figure 3 shows the estimation of surface area per volume for various configurations. The VACNT forests are generated with 4 nm catalyst patterns. The deposited sacrificial layer is with a thickness of 3 nm, while the deposited structural layer is of a thickness of 2 nm, 3 nm or 5 nm respectively. In general, the surface area increases as the deposited layer number increases.

For the configuration with structure layer of a thickness 5nm, the surface area increases to a value around $225 m^2/cm^3$; for the configuration with structure layer of a thickness 3nm, the surface area increases to a value around $300 m^2/cm^3$; for the configuration with structure layer of a thickness 2nm, the surface area increases to a value around $350 m^2/ cm^3$.

It is also possible to separate the layers of structural material by a solid or pseudosolid electrolyte instead of a sacrificial material. The electrolyte would serve as a path for ion conduction and would not need to be removed.

By removing the sacrificial layers in the nanostructure, the remaining structural layers are not mechanically connected to each other, which opens the possibility of deformation and displacement of the layers. This can reduce effectively the surface area. There are two solutions to solve this problem by creating mechanical connections between the structural layers.

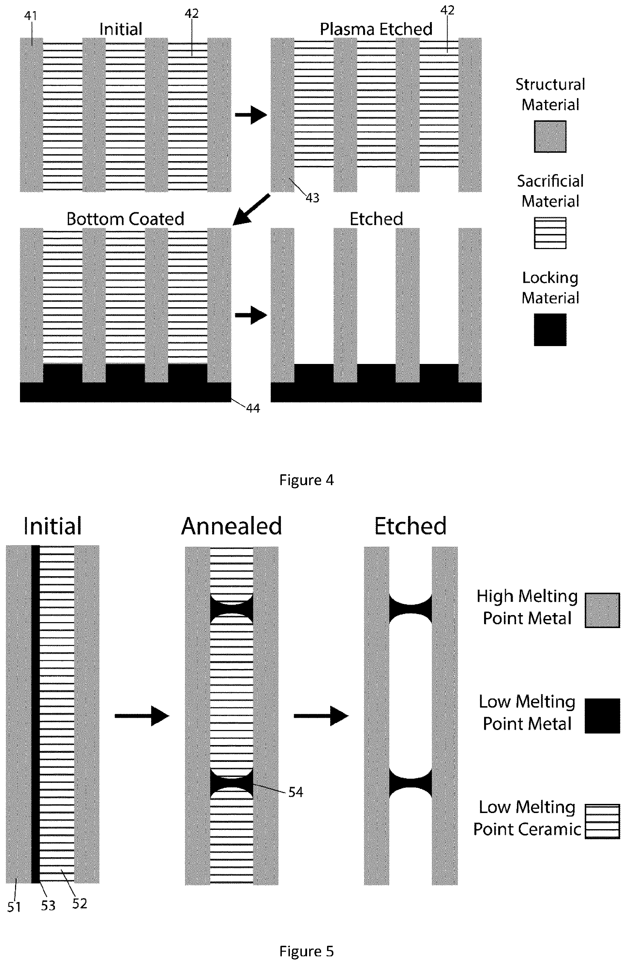

For the first solution, the layers are mechanically locked at the bottom side of the nanostructure. As illustrated in the figure 4, the bottom of the nanostructure could by plasma etched before the sacrificial material is removed. The plasma etching is carried out in two steps. In the first step, all the layers of both structure material 41 and sacrificial material 42 are etched in order to expose all the layers to exterior. In the second step, only the sacrificial material 42 is etched to form protrusions 43 of the structural material. For the example of using tungsten as the structural material and using carbon as the sacrificial material, the plasma etching in the first step is performed by $SF_6 + O_2$ plasma, while in the second step is only performed by $O_2$ plasma. The protrusions of the structural material could then be coated with a filler material 44, which fills the recesses between the protrusions, by plasma enhanced chemical vapor deposition (PECVD) or physical vapor deposition (PVD). The filler material could be carbon or a kind of metal. The filler material forms a solid base at the bottom of the nanostructure to lock the multiple layers separated by the pores.

A second solution is to create nanoparticle spacers between the layers to lock the relative positions of the layers as illustrated in the figure 5. One method of doing so is to add a layer of lower melting point material 53 between the layers of the structural material 51 and the sacrificial material 52. For an example of using tungsten as the structural material and using iron oxide as the sacrificial material, tungsten is the high melting point structural layer, then copper is the added low melting point layer, and iron oxide is the sacrificial layer. Because copper has a lower melting point relative to tungsten, the copper layer becomes mobile and reorganizes its shape at a lower temperature than the tungsten layer. By annealing at the melting temperature of copper, bridges of copper 54 between the tungsten layers can be created. The copper bridges remain as nanoparticle spacers between the structural layers after removal of sacrificial layers in iron oxide by HF vapor.

Application in supercapacitors

Ordinary capacitors comprise a dielectric film sandwiched between two metal foils. When a voltage difference is applied to the metal foils, charges build up on either side of the dielectric film. When the voltage is removed, these built-up charges remain, which generate themselves a voltage that can be used to drive electronics. The energy stored in a capacitor is given by

$$E = \frac{1}{2}CV^2 \qquad (1)$$

where E is the stored energy, V is the applied voltage and C is the capacitance defined by

$$C = A\frac{\varepsilon_r \varepsilon_0}{d} \qquad (2)$$

where A is the surface area of the electrodes, $\varepsilon_r$ and $\varepsilon_0$ are constants, and d is the dielectric thickness.

Supercapacitors operate on a similar principal, but instead of separating the two electrodes with a dielectric, they are separated by an electrolyte. When a voltage is applied, ions in the electrolyte build up at the surface of the electrodes. To a first order approximation, eq. 2 still applies. d is the effective separation between the surface and the ions, and A is the surface area of the interface between the electrolyte and the electrode. d is significantly smaller (0.3-0.8 nm) than in ordinary capacitors, and A is significantly larger because the electrolyte can easily conform to geometrically complex, high surface area per volume electrodes (e.g. activated carbon). Consequently, the capacitance of supercapacitors is much larger than ordinary capacitors. The downside is that the voltage is limited by the voltage limits of the electrolyte. Despite that limitation, supercapacitors generally have ~100X more energy density than ordinary capacitors.

The superimposed multilayers nanostructure has large surface area per volume. As increasing the surface area per volume proportionally increases the capacitance and the volumetric energy density, the superimposed multilayers nanostructure can effectively increase the volumetric energy density of supercapacitors.

*Pore control*

Activated carbon (AC) is most common electrode material for commercial supercapacitors. It has a large surface area, both specific (up to 2000 $m^2$/g) and volumetric (up to 1000 $m^2/cm^3$), which depends on the source material and processing parameters. It is inexpensive to make AC by carbonizing and activating organic material. The pore sizes effect the capacitance of a supercapacitor electrode. It should be noted that AC has a broad pore size distribution (~0.4-4.0 nm). Consequently, controlling pore sizes in AC is difficult.

Carbide derived carbons (CDC) are made by removing the metal out of metal carbides. Removal can be done using various methods including etching with halogens, etching with supercritical water, or vacuum decomposition. Etching with chlorine gas is the most popular method for electrostatic double-layer capacitors (EDLC) applications. Various forms of carbon can be generated using this method. The simplest form is disordered carbon which is also the best for EDLCs.

Using superimposed nanostructures gives unprecedented control of pores size and pore distribution. The pore size is fully defined by the thickness of the sacrificial layers. The distribution of pore sizes is a parameter to measure how much pore sizes vary inside an electrode. The pore distribution can theoretically be atomically narrow, which means that the difference in the size of the pores throughout the electrode can theoretically be less than the size of an atom. However, if the structural layers deform or shift, the pore distribution will broaden. For example, the movement of a layer decreases the sizes of the pores in the movement direction, and increases the sizes of the pores on the opposite movement direction. When there is a large variety in the sizes of the pores, it means that there is a broad distribution of pore sizes. However, the distribution will remain narrower than ACs or CDCs. In addition, deformations and shifts can be prevented by adding mechanical connections between the layers.

Pore size is important for ion transport and capacitance per surface area. Firstly, let us consider ion transport. Maximum power density of a supercapacitor is given by

$$P = \frac{1}{4}\frac{V^2}{R_i} \qquad\qquad 3$$

where V is the maximum voltage and Ri is the internal resistance. Effective power density is half this value. Internal resistance is largely a function of the diffusion coefficient.

$$R_i \propto \frac{1}{D} \qquad\qquad 4$$

Effective diffusion inside the nanostructure is decrease from the bulk as in

$$D_e = D_B \frac{\theta\delta}{\tau} \qquad\qquad 5$$

where $D_B$ is the diffusion coefficient in the bulk, $\theta$ is the porosity available for transport, $\tau$ is the tortuosity, and $\delta$ is the constrictivity. Combining equations (4) and (5), the internal resistance due to ion transport in the solid can be related to internal resistance of ion transport in bulk electrolyte by

$$R_{ie} = R_{iB} \frac{\tau}{\theta\delta} \qquad\qquad 6$$

$R_{ie}$ cannot be directly put back into equation (3) because there are contributions to internal resistance from ion transport outside the electrodes ($R_B$) and electron transport ($R_e$). By adding these factors, an expression for power is obtained.

$$P = \frac{1}{4}\frac{V^2}{R_B + R_e + R_{iB}\frac{\tau}{\theta\delta}} \qquad\qquad 7$$

However, it should be noted that $R_B$ and $R_e$ are generally much lower than $R_{ie}$ in practical supercapacitors.
As seen in equation (7), power decreases with decreasing constrictivity. Constrictivity can be estimated by

$$\delta = (1 - \lambda)^2(1 - 2.104\lambda + 2.09\lambda^3 - 0.95\lambda^5) \qquad\qquad 8$$

where $\lambda$ is the ratio of the ion diameter to the pore diameter (assuming cylindrical pores) and should be <0.5 for equation (8) to be a valid approximation. From equations (8) and (7), the importance of pore size for regulating transport and power can be seen. It should also be noted that the electrode geometry is another important parameter for power as will be further discussed below.

*Geometry Control*

By patterning the catalyst from which the VACNTs are grown, the superimposed multilayer nanostructures (VACNTs) can be formed in complex high aspect ratio shapes with small footprint and large height. When the superimposed multilayer nanostructures are used as electrodes for the supercapacitors, the design of the geometrical shape of the electrodes can further increase volumetric energy density of the supercapacitor. For example, interdigitated electrodes can have short transport distances. These short distances offset the negative transport effect of constrictivity. The pores can be made smaller and even though the ions are moving slower, the power density can improve or remain the same because the ions do not have to travel as far.

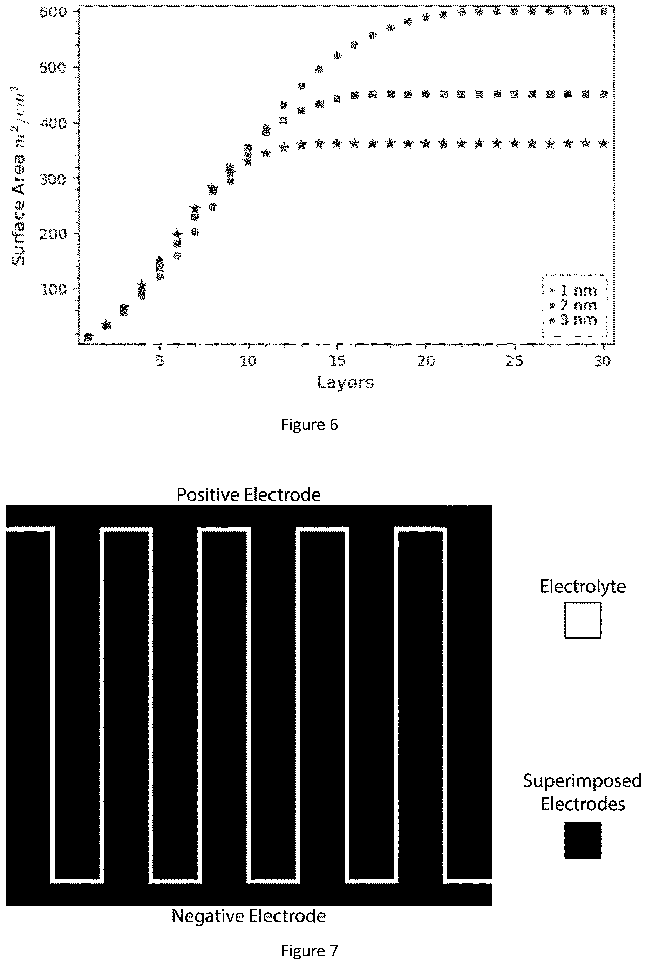

Figure 6 shows the estimation of surface area per volume for smaller pore size. The VACNT forests are generated with 4 nm catalyst patterns. The deposited structural layer is with a thickness of 2 nm, while the deposited sacrificial layer is of a thickness of 1 nm, 2 nm or 3 nm respectively. In general, the surface area increases as the deposited layer number increases.

For the configuration with sacrificial layer of a thickness 3 nm, the surface area increases to a value around 350 $m^2/cm^3$; for the configuration with sacrificial layer of a thickness 2 nm, the surface area increases to a value around 450 $m^2/cm^3$; for the configuration with sacrificial layer of a thickness 1nm, the surface area increases to a value around 600 $m^2/cm^3$.

Surface area is also increased because the nanostructure occupies 100% of the volume of the electrode. In conventional electrodes, which use particles of activated carbon, the nanostructure only occupies ~50% of the electrode volume. This means that the effective volumetric surface area for conventional electrodes is ~1/2 the bulk value. Even the highest volumetric density of activated carbon (1000 $m^2/cm^3$) can only give an electrode with volumetric surface area of 500 $m^2/cm^3$. For electrodes made with superimposed multilayers nanostructures, the nanostructures are grown directly into the shape of the electrodes. Thus, the nanostructure occupies 100% of the electrode volume.

The figure 7 shows a supercapacitor made with interdigitated electrodes in superimposed multiplayer nanostructure. A positive electrode and a negative electrode, each in the form of a comb, intersect with the comb teeth of each other. Each electrode is made with a superimposed multilayer nanostructure. The electrolyte is filled in the space between the two electrodes. When the electrode is made of carbon or metal, the electrode is conductive, there is no need of additional current collectors.

Additionally, VACNT based superimposed nanostructures can be grown to heights >1 mm. For supercapacitors, there are components like current collectors, seperators, and packaging stuff that take up space. The thicker the electrode is, the les sis the need for the extra component, which increases the energy density of the final cell. This enables high areal capacitances important to full cell volumetric energy density. Furthermore, these VACNT based electrodes can be patterned to small footprints for high performance micro-supercapacitors.

Electrolytes

Electrolytes choice can affect both power and energy density of supercapacitors. For example, equation 1 shows that energy stored ranges with $V^2$. Consequently, an electrolyte with a high voltage range can increase the energy density significantly. Additionally, in EDLCs the ionic conductivity of the electrolyte is linked to power density because all ionic transport is in the electrolyte (unlike in a battery where ions transport in the volume of the electrode which is often the limiting factor). There are three main types of electrolytes used : aqueous, ionic liquid, and organic.

Aqueous electrolytes are usually some form of acid or base (e.g. KOH). They are extremely common in the scientific literature because it is easier to assemble cells with them. They don't have sensitivity to humidity. Additionally, they have high ionic conductivities. However, they are not often found in commercial products because they have a much lower voltage range than the other electrolytes (0.6-1.4 V).

Ionic liquids do not use a solvent. Rather, they are room temperature molten salts, comprised exclusively of ions. They have the highest voltage range (2.6-4.0 V) and are non-flammable. However, they are expensive and have low ionic conductivity at room temperature.

Organics electrolytes are in between aqueous electrolytes and ionic liquids in several categories including price, ionic conductivity, and voltage range. The big selling point for organic electrolytes is their remarkable cycle life (1,000,000+ cycles). Consequently, organic electrolytes are used in the majority of commercial EDLCs.

Solid or pseudo-solid electrolytes are of particular interest for micro-supercapacitors because they require less packaging. As with batteries, there are three main types solid/pseudo-solid electrolytes: inorganic solid electrolytes (ISE), dry polymer electrolytes (PE), and gel polymer electrolytes (GPE). GPEs are the only ones regularly used in batteries or supercapacitors. PEs and ISEs have two low of ionic conductivities for most applications. All types are more challenging in supercapacitors where the electrolyte needs to make good contact with all of the surface area of the electrode.

**Claims**

1. Method for fabricating an electrode comprising the following steps:

   - Generating a three-dimensional (3D) nanostructure,
   - Depositing superimposed multilayers of structural material and sacrificial material that is different from the structural material, on the internal surfaces of the 3D nanostructure,
   - Removing the sacrificial material to form pores between the layers of structural material.

2. Method according to claim 1, wherein the 3D nanostructure is made from a matrix of nanotubes or nanorods realized in the material among carbon, boron nitride, silicon.

3. Method according to precedent claim, wherein the porosity of the 3D nanostructure is controlled by varying the diameter of the nanotubes/nanorodes, the pitch between the nanotubes/nanorodes, the thickness of the superimposed multilayers.

4. Method according to claim 1, wherein the 3D nanostructure is made from a vertically aligned carbon nanotubes arrays (VANTAs).

5. Method for fabricating an electrode according to claim 1, wherein the superimposed multilayers are deposited by atomic layer deposition (ALD), chemical vapor deposition (CVD), molecular layer deposition (MLD).

6. Method according to claim 1, the structural material is chosen from Carbon, tungsten, titanium, copper, the sacrificial material is chosen from Silicon oxide, iron oxide, silicon, carbon.

7. Method according to claim 1, wherein the sacrificial material is at least partially removed by plasma etching.

8. Method according to claim 1, wherein the three-dimensional (3D) nanostructure is removed.

9. Method according to claim 1, wherein a mechanical connection is added between the layers of structural material to avoid displacement of the layers.

10. Method according to precedent claim, wherein the mechanical connection is generated by adding a bottom base from one side of the 3D nanostructure to lock the structural layers.

11. Method according to the claim 9, wherein the mechanical connection is generated by annealing a low melting point material between the structural layers.

12. Electrode for a supercapacitor comprising a three-dimensional (3D) nanostructure, the internal surfaces of which are coated/deposited by superimposed multilayers of at least one structural material with pores confined between layers.

13. Electrode of the precedent claim, wherein a mechanical connection is placed between the structural layers to link and to fix the structural layers.

14. Electrode of the precedent claim, wherein the mechanical connection is a bottom base in connection with all the multilayer of structural material at one side of the 3D nanostructure.

15. Electrode of the claim 12, wherein the mechanical connection is in the form of many nanoparticle spacers between the multilayer of structural material.

16. Supercapacitor with at least one electrode from any one of the precedent claim, wherein an electrolyte is filled inside the pores between the structural layers.

17. Supercapacitor according to the precedent claim, wherein the electrolyte is chosen among aqueous electrolyte, ionic liquid, organic electrolyte, solid or pseudo-solid electrolyte.

Figure 1

Figure 2a

21

22

23

24

Layer 1

Layer 2

Figure 2b

Figure 3

Initial

41

42

Plasma Etched

42

43

Bottom Coated

Etched

44

Structural Material

Sacrificial Material

Locking Material

Figure 4

Initial

Annealed

Etched

51  53  52

54

High Melting Point Metal

Low Melting Point Metal

Low Melting Point Ceramic

Figure 5

Figure 6

Positive Electrode

Electrolyte

Superimposed
Electrodes

Negative Electrode

Figure 7

Europäisches
Patentamt

European
Patent Office

Office européen
des brevets

**EUROPEAN SEARCH REPORT**

Application Number

EP 21 15 8434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 958 791 B (SHENZHEN INST ADV TECH) 28 April 2020 (2020-04-28) * claim 1 * | 12,16,17 | INV. H01G11/26 |
| Y | | 13-15 | H01G11/36 |
| A | | 1-11 | H01G11/86 |
| Y | US 2017/221645 A1 (GANGOPADHYAY PALASH [US] ET AL) 3 August 2017 (2017-08-03) * claim 1 * | 13-15 | |
| A | CN 110 867 327 B (UNIV NORTH CHINA ELECTRIC POWER) 9 February 2021 (2021-02-09) * claim 1 * | 1-17 | |
| A | US 2017/338057 A1 (MOON JUN HYUK [KR] ET AL) 23 November 2017 (2017-11-23) * claim 1 * | 1-17 | |

TECHNICAL FIELDS SEARCHED (IPC)

H01G

The present search report has been drawn up for all claims

| Place of search | Date of completion of the search | Examiner |
|---|---|---|
| Munich | 3 August 2021 | Lescop, Emmanuelle |

EPO FORM 1503 03.82 (P04C01)

**EP 4 047 626 A1**

## ANNEX TO THE EUROPEAN SEARCH REPORT
## ON EUROPEAN PATENT APPLICATION NO.

EP 21 15 8434

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2021

| Patent document cited in search report | | Publication date | Patent family member(s) | | Publication date |
|---|---|---|---|---|---|
| CN 107958791 | B | 28-04-2020 | NONE | | |
| US 2017221645 | A1 | 03-08-2017 | CA 2957918 A1 | | 18-02-2016 |
| | | | US 2017221645 A1 | | 03-08-2017 |
| | | | WO 2016025532 A1 | | 18-02-2016 |
| CN 110867327 | B | 09-02-2021 | NONE | | |
| US 2017338057 | A1 | 23-11-2017 | KR 20170131053 A | | 29-11-2017 |
| | | | US 2017338057 A1 | | 23-11-2017 |

EPO FORM P0459

For more details about this annex : see Official Journal of the European Patent Office, No. 12/82